# EUROPÄISCHE PATENTSCHRIFT

(11) **EP 0 540 883 B1**
(45) Veröffentlichungstag und Bekanntmachung des Hinweises auf die Patenterteilung: **27.09.1995**
(21) Anmeldenummer: 92116869.6
(22) Anmeldetag: 02.10.1992
(51) Int. Cl.: A01D 41/14

(54) **Selbstfahrender Mähdrescher mit zweigeteiltem Schneidwerk**
Self-propelled combine harvester with mowing table divided in two parts
Moisonneuse-batteuse automotrice avec table de coupe en deux parties

(30) Priorität: 06.11.1991 DE 4136465; 23.11.1991 DE 4138535
(43) Veröffentlichungstag der Anmeldung: 12.05.1993
(73) Patentinhaber: CLAAS Kommanditgesellschaft auf Aktien, 33428 Harsewinkel (DE)
(72) Erfinder: Ristic, Stevan, W-4804 Versmold (DE)

(56) Entgegenhaltungen:
- DE-A- 3 830 908
- FR-A- 1 545 288

## Beschreibung

Die Erfindung betrifft einen selbstfahrenden Mähdrescher mit an seinem Zugehörigen Schrägfördererkanal über Schneidwerkstragarme angehängtem zweigeteiltem Schneidwerk, dessen beide Hälften in horizontaler Ebene schwenkbar und symetrisch ausgebildet sind, wobei jeder Schneidwerkshälfte eine Mulde, ein Mähbalken, eine Einzugswalse sowie eine antreibbar in Tragarmen gelagerte Haspel zugeordnet sind.

Bei derartigen Mähdreschern sind die Tragarme für die schwenkbaren Schneidwerkshälften einendig im Bereich des Schrägfördererkanals und anderenends mit je einer Schneidwerkshälfte schwenkbar verbunden. Um nun zu erreichen, daß in für die Transportstellung eingeschwenkter Lage die Haspeltragarme nicht mit den Schneidwerkstragarmen kollidieren, sind letztere im Bereich des Schrägfördererkanals auf relativ hohen Konsolen gelagert (DE-P 38 30 908). Eine solche Lagerung weist jedoch den Nachteil auf, daß zum einen mit Bezug auf die Höhe ein großer Bauraum benötigt wird und zum anderen die Lagerung für die Schneidwerkshälften zur Instabilität neigen, falls nicht konstruktiv sehr aufwendige Verstärkungen vorgesehen sind.

Der vorliegenden Erfindung liegt daher das Problem zugrunde, einen selbstfahrenden Mähdrescher der eingangs näher bezeichneten Art so auszubilden, daR einerseits die Schwenkbarkeit der beiden Schneidwerkshälften in keiner Weise beeinträchtigt wird und andererseits eine stabile Schwenklagerung bei gleichzeitiger kompakter Bauweise erreicht werden kann. Diese Aufgabe wird dadurch gelöst, daß zumindest, die die Haspel tragenden Tragarme, die in Transportstellung im Bereich des Schrägförderers liegen, unterhalb der von den Schneidwerkstragarmen während der Schwenkbewegung überstrichenen horizontalen Ebene liegen, daß an den dem Schrägfördererkanal abgewandten Enden der die Haspel (26) tragenden Tragarme (21) die Schwenkebene nach oben überragende Befestigungseinrichtungen angebracht sind, mit deren oberen Bereichen schräg nach vorn verlaufende Führungen verbunden sind zur Aufnahme der Haspelhälften und daß die Schneidwerkstragarme ausgehend von der theoretischen geraden Verbindung zwischen den Anlenkpunkten eines jeden Tragarmes (7 bzw. 8) in Transportstellung betrachtet nach innen abgebogen sind.
Im Folgenden soll die Erfindung anhand eines Ausführungsbeispieles und mehrerer dieses schematisch darstellender Figuren näher erläutert werden, wobei das zu beschreibende Ausführungsbeispiel einschließlich der Zeichnungsfiguren wesentliche Merkmale der Erfindung darstellen. Dabei zeigt:

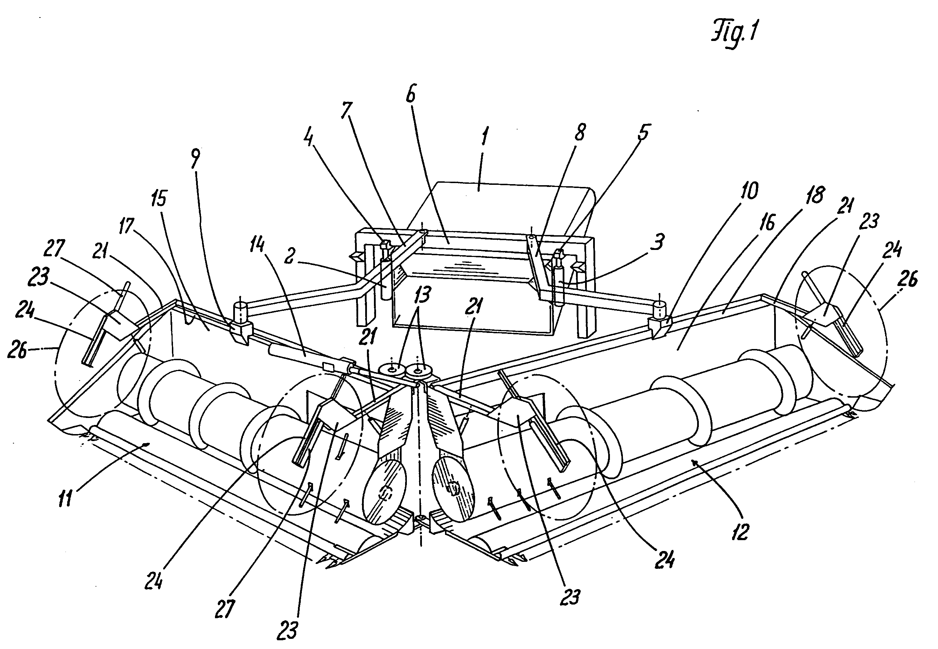

- Fig. 1: ein zweigeteiltes schwenkbars Schneidwerk in perspektivischer Darstellung während eines eines Schwenkvorganges,
- Fig. 2: das in Fig. 1 dargestellte Schneidwerk in Arbeitsstellung in der Seitenansicht,
- Fig. 3: das in Fig. 2 dargesellte Schneidwerk in der Seitenansicht, losgelöst vom Mähdrescher,
- Fig. 3a: eine Darstellung gemäß der Schnittlinie A-A aus Fig. 3 und

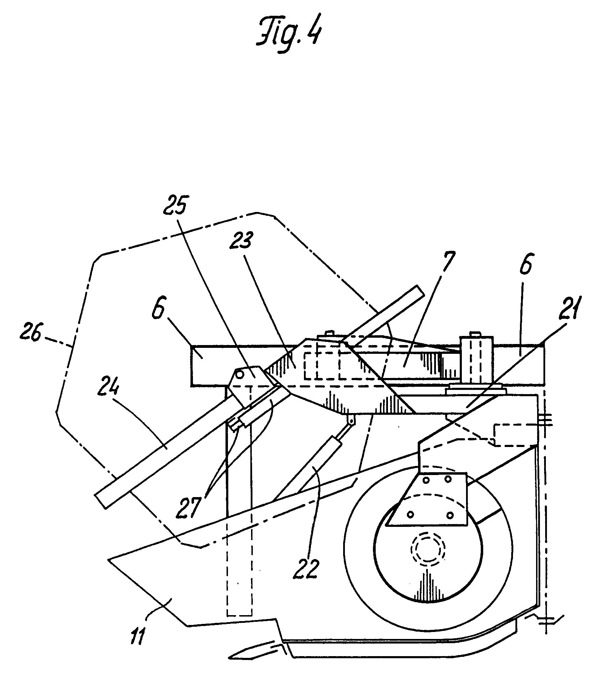

- Fig. 4: die linke Schneidwerkshälfte der in Fig. 1 dargestellten Einrichtung in Transportstellung gegen die Fahrtrichtung gesehen.

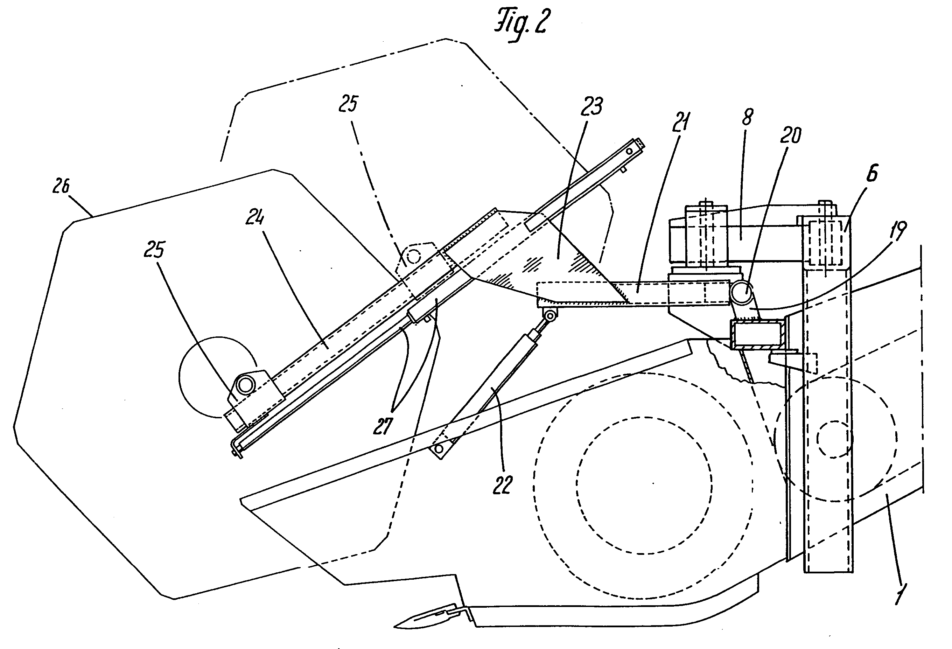

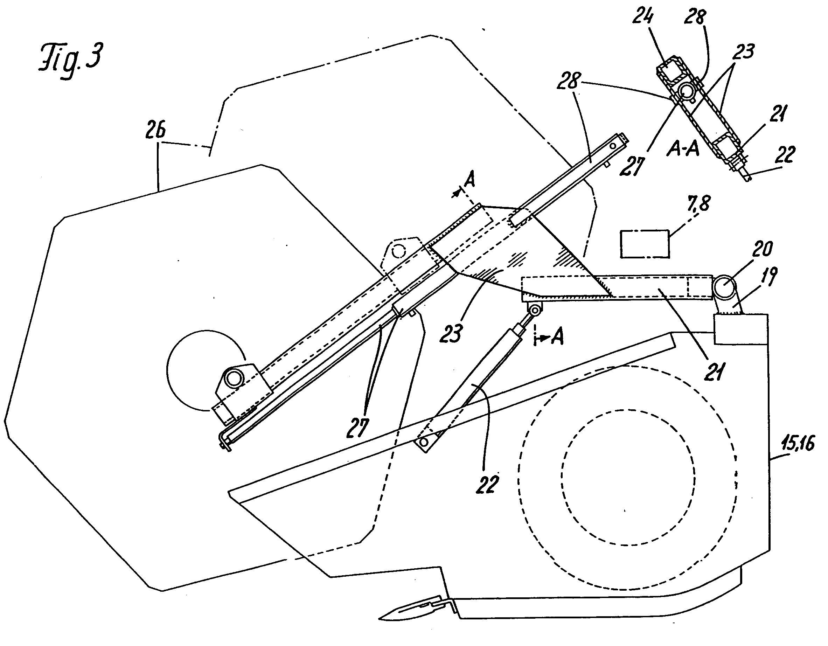

Mit 1 ist der Schrägförderer eines nicht näher dargestellten Mähdreschers bezeichnet, der beidseits zwei Kolbenzylindereinheiten 2 und 3 aufweist. Diese beiden Kolbenzylindereinheiten 2 und 3 haben an den kolbenstangenseitigen Enden Aufnahmen 4 und 5, auf denen ein U-förmig ausgebildeter Tragrahmen 6 aufruht. An dem waagerecht verlaufenden Teil dieses Rahmens 6 sind zwei Schneidwerkstragarme 7 und 8 schwenkbar gelagert, wobei die Schneidwerkstragarme 7 und 8 ausgehend von der theoretischen geraden Verbindung zwischen den Anlenkpunkten eines jeden Tragarmes (7 bzw. 8) in Transportstellung betrachtet nach innen abgebogen sind, so daR die Schneidwerkstragarme während der Schwenkbewegung der Schneidwerkshälften von ihrer Arbeitsstellung in die Transportstellung nicht mit den Befestigungseinrichtungen 23 der Tragarme 21 kollidieren. An den dem Schrägfördererkanal 1 abgewanten Enden weisen die Tragarme 7 und 8 Konsolen 9 und 10 auf, die mit je einer Schneidwerksmulde 11 und 12 verbunden sind und diese tragen.
Die beiden Mulden 11 und 12 sind über ineinandergreifende Zahnräder 13 und eine Kolbenzylindereinheit 14 schwenkbar gelagert und weisen im oberen Bereich der Muldenrückwände 15, 16 je einen Rahmen 17 und 18 auf. Mit beiden Enden eines jeden Rahmens 17, 18 sind Halter 19 verschweißt, die zur Aufnahme von Drehachsen 20 dienen. Mit diesen Drehachsen sind Schwenkarme 21 verbunden, an welche in ihrem vorderen Bereich Kolbenzylindereinheiten 22 angreifen. Desweiteren sind mit den vorderen Bereichen der Schwenkarme 21 nach oben ragende Befestigungseinrichtungen in Form von Platten 23 verschweißt, wobei jeder Schwenkarm 21 zwei mit Abstand zueinander verlaufende parallele Platten 23 aufweist (Fig. 3a), zwischen denen im oberen Bereich jeweils ein Führungsprofil 24 vorgesehen ist. Auf jedes Führungsprofil 24, die nach vorn schräg zum Boden geneigt verlaufen, ist eine Konsole 25 aufgesetzt, die zur Aufnahme der Haspel 26 dienen. Die Konsolen 25 sind mit den Kolbenstangen von Kolbenzylindereinheiten 27 verbunden, deren Zylinder einendig in einem U-Rahmen 28 gelagert ist, deren freien Enden mit den Platten 23 verschweißt sind. Aus den Fig. 2 und 3 ist ersichtlich, daß sich die Schneidwerkstragarme 7 und 8 oberhalb der Schwenkarme 21 befinden.

## Patentansprüche

1. Selbstfahrender Mähdrescher mit an seinem zugehörigen Schrägfördererkanal (1) über Schneidwerkstragarme (7, 8) angehängtem zweigeteiltem Schneidwerk, dessen beide Hälften in horizontaler Ebene schwenkbar und symmetrisch ausgebildet sind, wobei jeder Schneidwerkshälfte eine Mulde (11, 12), ein Mähbalken, eine Einzugswalse sowie eine antreibbar in Tragarmen gelagerte Haspel (26) zugeordnet sind,
**dadurch gekennzeichnet**,
daß zumindest die die Haspel tragenden Tragarme (21), die in Transportstellung im Bereich des Schrägförderers (1) liegen, unterhalb der von den Schneidwerkstragarmen (7, 8) während der Schwenkbewegung überstrichenen horizontalen Ebene liegen, daß an den dem Schrägfördererkanal (1) abgewandten Enden der die Haspel (26) tragenden Tragarme (21) die Schwenkebene nach oben überragende Befestigungseinrichtungen (23) befestigt sind, mit deren oberen Bereichen schräg nach vorn verlaufende Führungen (24) verbunden sind zur Aufnahme der Haspelhälften (26) und daß die Schneidwerkstragarme (7, 8) ausgehend von der theoretischen geraden Verbindung zwischen den Anlenkpunkten eines jeden Tragarmes (7 bzw. 8) in Transportstellung betrachtet nach innen abgebogen sind.

2. Selbstfahrender Mähdrescher nach Anspruch 1,
**dadurch gekennzeichnet**,
daß die Führungen (24) eine gestreckte Lage aufweisen.

3. Selbstfahrender Mähdrescher nach den Ansprüchen 1 und 2,
**dadurch gekennzeichnet**,
daß die Tragarme (21) eine gestreckte Lage aufweisen.

4. Selbstfahrender Mähdrescher nach den Ansprüchen 1 bis 3,
**dadurch gekennzeichnet**,
daß auf den Führungsprofilen (24) über Kolbenzylindereinheiten (27) verschiebbare Konsolen (25) aufgesetzt sind zur Aufnahme der Haspel (26).

## Claims

1. A self-propelled combine harvester comprising a cutting mechanism which is divided into two and which is suspended at its associated inclined conveyor duct by cutting mechanism carrier arms and the two halves of which are pivotable in a horizontal plane and are of a symmetrical configuration, wherein associated with each cutting mechanism half are a tray, a mower bar, a feed-in roller and a reel mounted drivably in carrier arms, characterised in that at least the carrier arms (21) which carry the reel and which in the transportation position are disposed in the region of the inclined conveyor (1) are disposed beneath the horizontal plane over which the cutting mechanism carrier arms (7, 8) pass during the pivotal movement, fixed to the ends thereof which are remote from the inclined conveyor duct (1) are fixing means (plates 23) which project upwardly beyond the pivotal plane, connected to the upper region thereof are inclinedly forwardly extending guides (guide members 24) for carrying the reel halves (26), and that the cutting mechanism carrier arms (7, 8), starting from the theoretical straight connection between the pivot mounting points of each carrier arm (7 and 8 respectively), when considered in the transportation position, are bent away inwardly.

2. A self-propelled combine harvester according to clad 1 characterised in that the guides (24) have an extended position.

3. A self-propelled combine harvester according to claims 1 and 2 characterised in that the carrier arms (21) have an extended position.

4. A self-propelled combine harvester according to claims 1 to 3 characterised in that brackets (25) which are displaceable by way of piston-cylinder units (27) are fitted on the guide members (24), for mounting the reel (26).

## Revendications

1. Moissonneuse-batteuse automotrice dont le canal de transport incliné porte par l'intermédiaire de bras de supports un dispositif de coupe en deux parties, lesdites parties pouvant pivoter dans un plan horizontal et étant conçues de manière symétrique, et à chacune de ces parties étant adjoints une auge de chargement, une barre de coupe, un rouleau d'alimentation ainsi que un rabatteur disposé dans des cadres de manière à pouvoir tourner et être actionné, **caractérisée en ce que** au moins les cadres (21) portant les rabatteurs et étant situés près du transporteur incliné (1) en position de transport, sont placés en-dessous du plan horizontal balayé par les bras (7, 8) du dispositif de coupe au cours du mouvement de pivotement, sur les extrémités opposées au canal de transport incliné desquels sont fixés des dispositifs de fixation (plaques) (23) faisant saillie vers le haut du plan de pivotement, avec la zone supérieure desquels sont reliées des glissières dirigées en oblique et vers l'avant (glissières profilées 24) et destinées à la réception des deux parties des rabatteurs (26) et en ce que les bras (7, 8) du dispositif de coupe sont courbés vers l'intérieur par rapport à la ligne droite reliant les points d'articulation de chacun des bras (7 respectivement 8) en position de transport.

2. Moissonneuse-batteuse automotrice selon la revendication 1, caractérisée en ce que les glissières (24) présentent une position allongée.

3. Moissonneuse-batteuse automotrice selon l'une ou l'autre des revendications 1 et 2, caractérisée en ce que les cadres (21) présentent une position tendue.

4. Moissonneuse-batteuse automotrice selon l'une ou l'autre des revendications 1 à 3, caractérisée en ce que des consoles (25) pouvant coulisser par l'intermédiaire d'unités de cylindres à piston sont disposées sur les glissières profilées (24) afin de recevoir le rabatteur.
